# EUROPÄISCHE PATENTSCHRIFT

(11) **EP 1 369 763 B1**
(45) Veröffentlichungstag und Bekanntmachung des Hinweises auf die Patenterteilung: **16.07.2008**
(21) Anmeldenummer: 03011730.3
(22) Anmeldetag: 23.05.2003
(51) Int. Cl.: G05G 1/14, B60K 26/02

(54) **Fahrpedal**
Gas pedal
Pédale d'accélérateur

(30) Priorität: 24.05.2002 DE 10222984; 26.10.2002 DE 20216521 U
(43) Veröffentlichungstag der Anmeldung: 10.12.2003
(73) Patentinhaber: AB Elektronik GmbH, 59368 Werne (DE)
(72) Erfinder: Hauschopp, Marion, 59387 Ascheberg-Herbern (DE); Baumeister, Andre, 59387 Ascheberg-Herbern (DE); Reich, Jürgen, 44532 Lünen (DE)
(74) Vertreter: Wenzel & Kalkoff

(56) Entgegenhaltungen:
- DE-A1- 3 809 910
- DE-U1- 29 805 253
- US-A- 5 568 797

## Beschreibung

Die Erfindung betrifft eine Fahrpedalvorrichtung.

Eine Vorrichtung der eingangs genannten Art ist aus der prioritätsälteren deutschen Patentanmeldung DE 102 11 018.2 bekannt, bei der ein Pedalelement gegenüber einer Basiseinheit zu bewegen ist, wobei wenigstens eine Motoreinheit vorgesehen ist, deren Rotoreinheit mit dem Pedalelement und deren Statoreinheit mit der Basiseinheit verbunden ist.

Eine Rückholeinheit holt das betätigte Pedalelement zurück. Mit Hilfe von Dämpferelementen und der Motoreinheit erfolgt eine Dämpfung der Pedalbewegung. Blockiert allerdings die Motoreinheit, läßt sich das Pedalelement nicht mehr betätigen. Das Fahrzeug ist fahruntüchtig.

Aus der US 5,568,797 A1 ist eine Pedalvorrichtung bekannt, bei der das Pedal über eine zwischengeschaltete Feder mit der Motoreineheit verbunden ist.

Aus der DE 298 05 253 U1 ist eine Fahrpedalvorrichtung bekannt, bei der ein Pedalelement mit einer Kolbenstange eines Kolbens eines Hydraulikzylinders verbunden ist. Dessen Zylinderelement ist mit einer Hydraulikflüssigkeit gefüllt. Über der höchsten und der niedrigsten Stellung des Kolbens ist eine Hydraulik-Leitung mit dem Zylinderelement verbunden. In der Hydraulik-Leitung ist ein Hydraulikventil angeordnet, das von einer Entscheidungslogik angesteuert wird. Die Entscheidungslogik ist als programmierbare Rechnereinheit ausgeführt. Mit der Mikrorechnereinheit ist ein Entfernungssensor verbunden. In Abhängigkeit von der vom Sensor ermittelten Entfernung wird das Ventil angesteuert und der Durchfluß des Hydrauliköls damit geregelt.

Auch wenn die Betätigung des Fahrpedalelements durch die Verringerung der Strömungsgeschwindigkeit des Hydrauliköls mit Hilfe des Ventil erschwert wird, reicht das gleichmäßige Ansteigen der notwendigen Kraftanstrengung nicht aus, um den Fahrzeugführer auf eine Gefahrensituation aufmerksam zu machen. Außerdem ist der Aufbau des Fahrpedals mit dem steuerbaren Hydraulikzylinder zu aufwendig.

Es stellt sich deshalb die Aufgabe, eine Vorrichtung der eingangs genannten Art so weiter zu entwickeln, daß ein Notbetrieb möglich ist.

Erfindungsgemäß wird diese Aufgabe durch die Merkmale des Anspruchs 1 oder 2 oder 3 gelöst.

Die mit der Erfindung erzielten Vorteile bestehen insbesondere darin, daß es bei einer Blockierung der Motoreinrichtung möglich ist, das Fahrpedal weiter zu betätigen. Das Fahrzeug lässt sich wieder bewegen und in eine Werkstatt fahren. Dort kann dann der Schaden behoben werden.

Zwischen der Motoreinheit und dem Pedalelement kann eine Kupplungseinrichtung angeordnet sein. Hierdurch ist es möglich, die Motoreinheit von der Pedaleinheit zu lösen, und das Pedalelement zu betätigen.

Das Lösen von der Pedaleinheit kann auch so vorgenommen werden, daß das Motorseil mit einer Dehnungsstrecke versehen ist, die eine Verlängerung des Motorseils ermöglicht.

Die Rückholeinheit kann wenigstens ein Kupplungs- und ein Motorseil aufweisen. Das Pedalelement kann mit dem Kupplungsseil und die Motoreinheit mit dem Motorseil derart verbunden werden, daß bei Blockade der Motoreinheit das Motorseil abgekoppelt wird. Durch die Verwendung eines Motor- und eines Kupplungsseils werden die strengen Vorschriften zwecks Sicherheit der Fahrpedaleinrichtung, die eine redundante Pedalrückholung fordern, eingehalten. Allerdings ist es durch die Trennung beider Seile und die unterschiedlichen Verknüpfungen der beiden Seile möglich, das Pedalelement bei Ausfall der Motoreinheit weiter betätigen zu können.

Die mit dem Kupplungsseil verbundene Kupplungseinheit kann in einem Gaspedaldrehpunkt angeordnet und die in einem Motordrehpunkt angeordnete Motoreinheit durch das Motorseil mit dem Gaspedaldrehpunkt verbunden sein, so daß eine Betätigung der einzelnen Elemente der Fahrpedaleinrichtung sicher möglich ist.

Die Kupplungseinheit kann als Rastkupplung, Stiftkupplung, Motorkupplung, Lamellenkupplung, Lösekupplung oder dergleichen ausgebildet sein. Mit anderen Worten, die Kupplungseinheit besteht aus zwei Körpern, die im Normalbetrieb so zusammengehalten werden, daß sie sich wie ein Körper verhalten. Im Bedarfsfall, also bei einer Blockierung der Motoreinheit lässt sich zeitweise oder dauerhaft dieser Zusammenhalt aufheben.

Wenn eine als Rastkupplung ausgebildete erste Ausführungsform einer Kupplungseinheit zum Einsatz kommt, kann sie aus einem Betätigungskörper mit einer Betätigungsverzahnung und einer Limp-home-Scheibe mit einer Limp-home-Verzahnung mit wenigstens einen Zahn bzw. einer Zahnlücke bestehen; der Betätigungskörper und die Limp-home-Scheibe können um eine im Gaspedaldrehpunkt angeordnete erste Sensorwelle bewegbar sein.

An der ersten Sensorwelle kann eine Pedal-Sensoreinheit angeordnet sein. Die Pedal-Sensoreinheit hat die Aufgabe, die Stellung des Fahrpedals an die Drosselklappeneinrichtung weiterzugeben, so daß jede Stellung des Fahrpedals eine entsprechende Stellung der Drosselklappe eingenommen werden kann, wodurch das Fahrzeug entsprechend zu bewegen ist.

Der Betätigungskörper und die Limp-home-Scheibe können mit einer Kupplungsfedereinheit zusammengedrückt werden. Durch das Zusammendrücken beider Körper werden die Verzahnungen, die sich gegenüberliegen aneinandergerückt und führen so zu einer Verbindung beider Körper. Bei einem Stillstand der Motoreinheit kann mit einer hohen Betätigungskraft zwischen 50 bis 200 N die Federkraft überwunden werden und ein Verschieben beider Körper untereinander erreicht werden. Die Betätigungskraft kann vorzugsweise 150 N betragen.

Das Kupplungsseil kann mit dem Betätigungskörper und das Motorseil mit der Limp-Home-Scheibe verbunden werden.

Wenn eine zweite Ausführungsform einer Kupplungseinheit zum Einsatz kommt, kann sie aus einem Limp-home- und einem Betätigungskörper bestehen. Beide Körper können durch wenigstens eine Stifteinheit zusammengehalten werden. Mit dem Limphome-Körper kann das Pedalelement und mit dem Betätigungskörper das Motorseil verbunden werden, das wenigstens teilweise an der Motoreinheit angeordnet ist.

Die mit der zweiten Ausführungsform der Kupplungseinheit erzielten Vorteile bestehen insbesondere darin, daß es bei einer Blockierung der Motoreinrichtung während der Fahrt möglich ist, durch ein verstärktes Niedertreten des Pedalelements beide Körper voneinander zu trennen. Bei einem Stillstand der Motoreinheit kann eine Kraft zwischen 50 bis 200 N eingesetzt werden, die die Stifteinheit sprengt und so beide Körper voneinander trennt. Hierdurch ist es möglich, einen der Körper wieder zu bewegen und damit das Fahrpedal weiter zu betätigen. Das Fahrzeug lässt sich nun wieder bewegen und in eine Werkstatt fahren. Dort kann der Schaden behoben werden. Dadurch, daß eine Stifteinheit eingesetzt wird, braucht diese nur durch eine neue ersetzt werden. An Stelle nur einer Stifteinheit können auch mehrere eingesetzt werden. Hierdurch ist es möglich, die Betätigungskraft entsprechend zu dosieren.

Die Stifteinheit kann mit einer Sollbrucheinheit versehen werden. Diese Sollbrucheinheit legt die aufzubringende Betätigungskraft je Stifteinheit fest.

Die Stifteinheit kann aus einem Stiftkörper und einem davor angeordneten Kupplungsstiftelement bestehen. In das Stiftelement kann eine teilweise umlaufende Sollbruchausnehmung als Sollbrucheinheit eingebracht werden. Hierdurch ist eine gezielte Abtrennung des Stiftkörpers möglich.

Der Stiftkörper kann in dem Limp-Home-Körper und das Kupplungsstiftelement in dem Betätigungskörper angeordnet werden. In dem Betätigungskörper kann ein Kupplungshülsenelement angeordnet sein, in dem das Kupplungsstiftelement einzusetzen ist. Hierdurch wird die Montage und die Wiederregenerierung beider Körper der gesamten Kupplungseinheit ermöglicht.

Das Pedalelement kann aus einem Fahrpedalelement bestehen, zwischen dem und dem Limp-Home-Körper gelenkig ein Gashebelelement angeordnet sein kann. Hierdurch ist die Kraft bei der Betätigung des Fahrpedalelements schnell und wirksam auf die gesamte Einrichtung zu übertragen. Der Betätigungskörper kann in einem Kupplungswellenelement enden, das mit einer Pedal- Sensoreinheit verbunden sein kann.

Der Betätigungskörper kann mit einem Kelch- und einem Haltekörper gelagert werden. Der Limp-Home-Körper wiederum kann um den Betätigungskörper angeordnet sein. Hierdurch ist bei Betrieb der gesamten Einrichtung ein lockeres und einfaches Betätigen möglich. Kommt es zu einem Blockieren des Motors, reicht das einfache Führen des Limp-Home-Körpers um den Betätigungskörper aus.

Das Kupplungsseil kann über wenigstens ein Dämpferelement geführt werden. Das Kupplungs- und das Motorseil können mit wenigstens einem Federelement verbunden werden, wobei Federelemente als weitere Dämpferelemente wirksam werden können. Die Dämpferelemente sorgen dafür, daß eine entsprechende Dämpfungskraft der Fahrpedalbewegung entgegengesetzt wird.

Die aktiven Teile, wie die Motoreinheit, die erste Kupplungseinheit, das Kupplungs- und das Motorseil, ein erstes und ein zweites Federelement und die Pedal-Sensoreinheit können wenigstens teilweise in einem Basisgehäuseelement des Basisteils angeordnet sein. Das Basisgehäuseelement kann wenigstens teilweise mit einer Bodenplatte abschließen. Anstelle der ersten kann die zweite Kupplungseinheit eingebaut werden. Hierdurch wird gesichert, daß die aktiven Teile vor Schmutz und anderen äußeren Einflüssen geschützt werden.

Es kann eine Steuereinheit vorgesehen werden, die mit einem Sensorelement verbunden ist und mit der die Motoreinheit zu steuern ist. Das Steuersensorelement kann als Sensor für verschiedene Gefahren ausgebildet sein. So kann das Steuersensorelement ein Geschwindigkeitssensor, ein Abstandssensor, ein Temperatursensor, oder dergleichen sein. Es ist auch möglich, alle Sensorausführungen mit der Steuereinheit zu verbinden. Hierdurch erhöht sich der Komfort des intelligenten Fahrpedals. Anstelle eines Sensorelements können Signale von einer übergeordneten Einheit, z.B. einem Fahrdynamikrechner, der Steuereinheit zur Verfügung gestellt werden.

Die Steuereinheit kann eine Mikrorechnereinheit mit einem E²PROM-Speicher zur Eingabe des Normalzustandes sein. Der E²PROM ist ein Festwertspeicher, der hinsichtlich der Überschreibbarkeit die Eigenschaften eines RAMs hat. Hierdurch ist es möglich, die unterschiedlichen Normalzustände einzugeben. Hinsichtlich des Herauslesens des eingeschriebenen Wertes für den Normalzustand verhält sich der E²PROM wie ein Festwertspeicher ROM.

Die Normalzustände können eine vorgeschriebene Höchstgeschwindigkeit, ein vorgeschriebener Sicherheitsabstand, eine Eisbildungstemperatur oder dergleichen sein. Die Normalzustände sind nicht auf die drei angegebenen begrenzt.

Die Motoreinheit kann ein Torquemotor sein, wobei dessen Rotoreinheit mit dem Pedalelement verbunden und dessen Statoreinheit in der Basiseinheit angeordnet ist. Der Torquemotor ist als Motor ohne Zwischengetriebe einsetzbar. Die Motoreinheit kann beispielsweise direkt oder über ein Motorseil mit dem Pedalelement verbunden sein. Durch das mögliche Einbauen des Torquemotors zum einen im Gaspedaldrehpunkt und zum anderen direkt in die Basiseinheit wird dessen Wirksamkeit verstärkt und der Gesamtaufbau des Fahrpedals vereinfacht.

Der Torquemotor kann als Zwillings-Torquemotor ausgebildet sein. Dieser Motor entwickelt die von Torquemotoren bekannten Eigenschaften in besonders hervorragendem Maße.

Die Erfindung ist in der Zeichnung dargestellt und wird im Folgenden näher beschrieben.

### Es zeigen:

- Fig. 1: ein Fahrpedal mit einem Torquemotor und einer Kupplungseinheit in einer schematischen, perspektivischen, teilweise geöffneten Darstellung,
- Fig. 2a bis 2c: Teildarstellungen eines Fahrpedals gemäß Fig. 1,
- Fig. 3a: einen Torquemotor für ein Fahrpedal gemäß den Fig. 1 bis 2c in einer schematischen, perspektivischen Darstellung,
- Fig. 3b: einen Torquemotor gemäß Fig. 3a mit einem abgenommenen Gehäuse-element in einer schematischen, perspektivischen Darstellung,
- Fig. 3c: einen Torquemotor gemäß Fig. 3b in einer schematischen, auseinandergezogenen, perspektivischen Darstellung,
- Fig. 4a bis 4g: Teildarstellungen einer ersten Ausführungsform einer Kupplungseinheit für ein Fahrpedal mit Torquemotor gemäß den Fig. 1 bis 2c in einer schematischen auseinandergezogenen perspektivischen Darstellung,
- Fig. 5a: eine Prinzip - Anordnung einer zweiten Ausführungsform einer Kupplungseinheit für ein Fahrpedal mit Torquemotor gemäß den Fig. 1 bis 2c,
- Fig. 5b: eine Kupplungseinheit für ein Fahrpedal gemäß den Fig. 5a in einer schematischen Schnittdarstellung,
- Fig. 5c: eine Kupplungseinheit gemäß Fig. 5b in einer teilweise geöffneten, perspektivischen Darstellung,
- Fig. 6a: einen Verlauf einer Pedalkraft eines betätigten Fahrpedalelements mit Torquemotor in Abhängigkeit vom Weg in einer schematischen Darstellung und
- Fig. 6b: einen Verlauf einer Pedalkraft bei Blockierung eines Torquemotors mit anschließender Entkopplung in Abhängigkeit vom Weg in einer schematischen Darstellung.

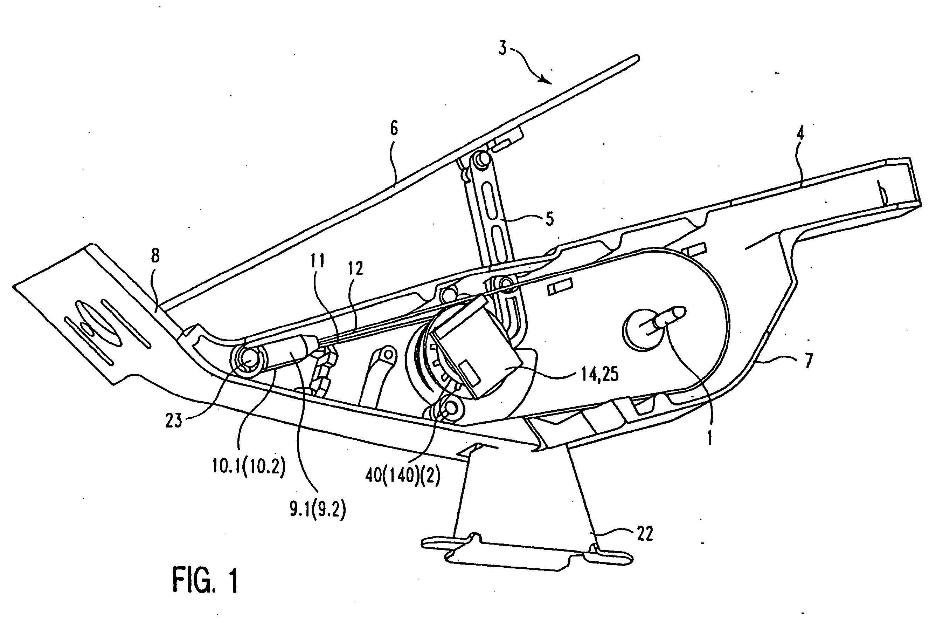

In den Fig. 1 bis 2c ist ein intelligentes Fahrpedal dargestellt.

Das Fahrpedal weist ein Pedalelement 3 auf, das gegenüber einer Bodenplatte 4 zu bewegen ist. Hierbei besteht das Pedalelement 3 aus einem Fahrpedalelement 6, das mit einem Gashebelelement 5 verbunden ist. Das Fahrpedalelement 6 ist in einem Fahrpedaldrehpunkt 8 an der Bodenplatte 4 angeordnet. Das Ende des Fahrpedalelements 6 ragt frei über das Pedalhebelelement 5 hinaus. Hierdurch wird gesichert, daß sich durch das Fahrpedalelement 6 mit dem Fuß das Fahrzeugführers das Pedalhebelelement 5 leicht betätigen lässt.

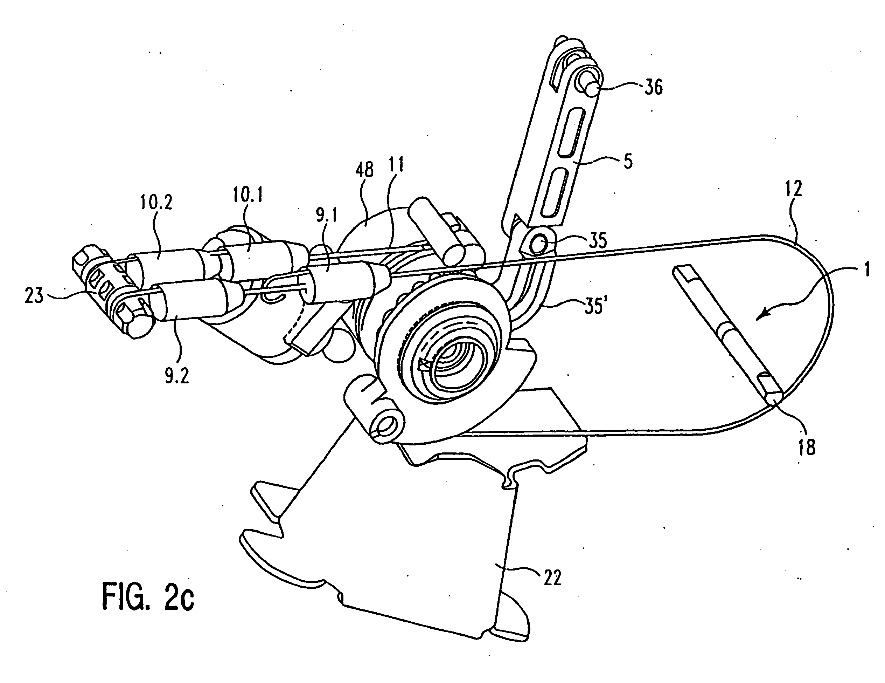

Durch zwei Pedalseile 11, 12 und eine Rückholeinheit 9.1, 9.2, 10.1, 10.2 (vgl. Fig. 2c) wird das Pedalhebelelement 5 und damit das Fahrpedalelement 6 immer in eine Ausgangsstellung gestellt. Mit Hilfe jeweils wenigstens zweier Federelemente 9.1, 9.2, 10.1, 10.2 der Rückholeinheit, die an einem Federhalteelement 23 gehalten sind, werden als Pedalseile ein Kupplungsseil 11 und ein Motorseil 12 zurückgezogen.

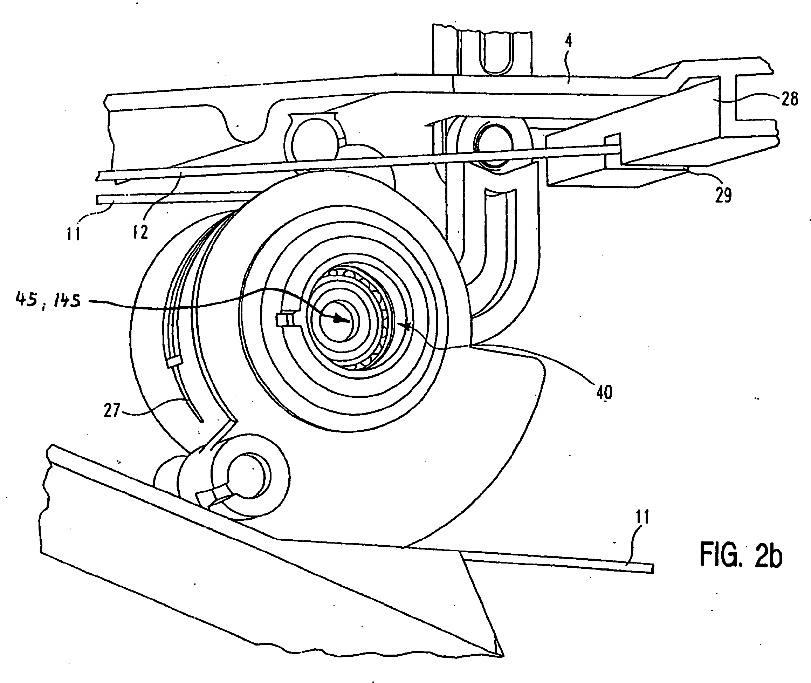

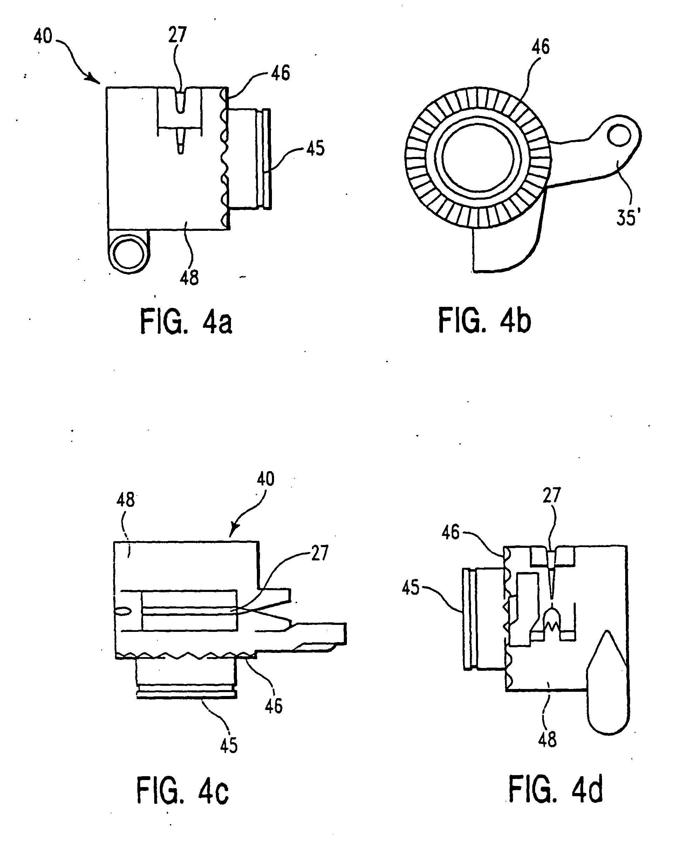

Wenigstens ein Dämpferelement 27 (vgl. Fig 2b), über das das Seil 11 gezogen wird, sorgt dafür, daß die Betätigung des Pedalelements 3 gedämpft wird. Das Dämpferelement 27 ist mit einer Vertiefung ausgebildet, deren Querschnitt aus Fig. 4d ersichtlich ist. Das Dämpferelement 27 nimmt das Seil 11 in einer Rinne auf, so daß sich bei der Abrollbewegung eine Reibungswirkung und so eine Dämpfung in beiden Bewegungsrichtungen ergibt. Das Dämpferelement 27 kann über rauhe Oberflächen verfügen, über das das Seil 11 geführt wird. Die Oberflächen können unterschiedliche Rauhigkeiten haben. Hierdurch wird eine gewünschte, einstellbare Bewegungshysterese ausgebildet.

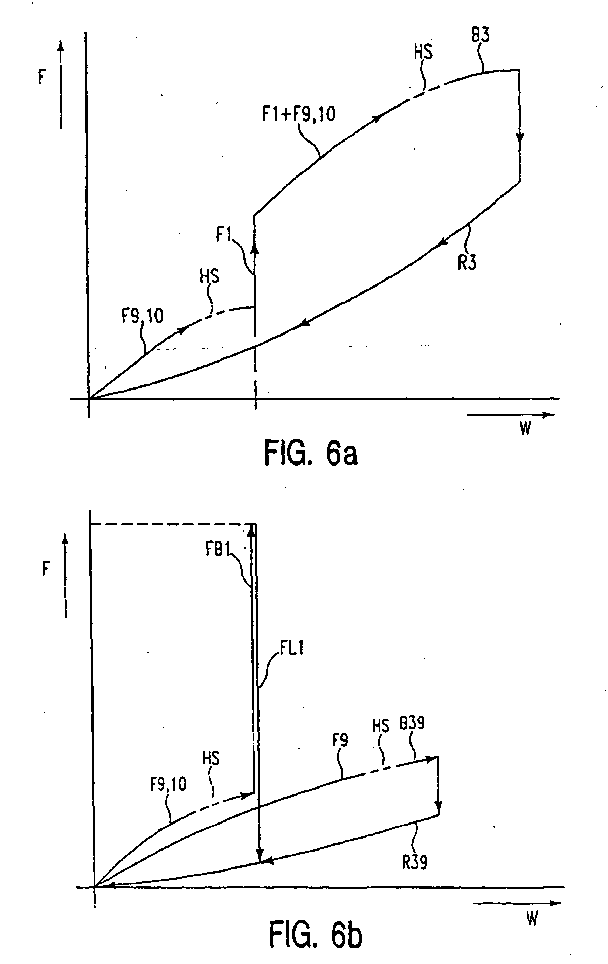

Weitere Dämpferelemente, d.h. die Federelemente erzeugen zusammen mit dem Dämpferelement 27 eine Dämpfungskraft F9, F10, die der Betätigungsbewegung des Fahrpedalelements durch den Fahrzeugführer, wie Fig. 6a zeigt, entgegenwirkt. Durch die Bremskraft der Dämpferelemente ist die Kurve F9, 10 leicht gewölbt.

An die Bodenplatte 4 schließt sich ein Bodengehäuseelement 7 an (vgl. insbesondere Fig. 1). Am Bodengehäuseelement 7 ist ein Gehäusefußelement 22 angeordnet.

Im Inneren des Bodengehäuseelements ist im Gaspedaldrehpunkt 2 eine Kupplungseinheit 40, 140 angeordnet. Vor der Kupplungseinheit 40, 140 ist ein Torquemotor 1 positioniert, von dem aus darstellerischen Gründen nur dessen Achse 18 abgebildet ist. Mit der Kupplungseinheit 40, 140 wird das Kupplungsseil 11 für den Torquemotor 1 das Motorseil 12 geführt. Das Motorseil endet, wie insbesondere Fig. 2c zeigt, an der Kupplungseinheit 40, 140.

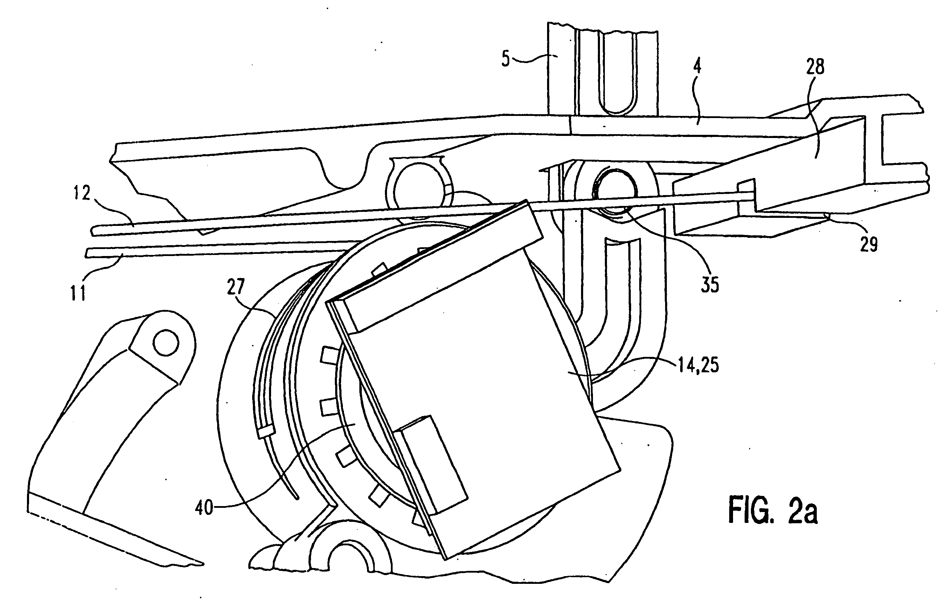

Wie insbesondere die Fig. 1 und 2a zeigen, ist auf einer Sensorwelle 45, 145 (vgl. Fig. 2b), die durch die Kupplungseinheit 40, 140 ausgebildet wird, eine Pedal-Sensoreinheit 25 positioniert. Die Pedal-Sensoreinheit erzeugt aus der Stellung der Sensorwelle 45, 145 ein entsprechendes Signal für eine weitere Verarbeitung in einer Drosselklappeneinheit eines Fahrzeugmotors. In die Pedal-Sensoreinheit kann eine Rechnereinheit 14 integriert werden.

Das Kupplungsseil 11 wird über das Dämpferelement, das als eine Ausnehmung ausgebildet ist, in der Kupplungseinheit 40, 140 geführt. Das Motorseil 12 hingegen wird mit Hilfe eines Motorseilführungsprofils 28 geführt, in den ein Führungsschlitz 29 eingebracht ist (vgl. insbesondere Fig. 1 und Fig. 2a).

Der Torquemotor 1 ist im Inneren des Bodengehäuseelements 7 angeordnet (vgl. Fig. 1). Hierdurch wird der Torquemotor geschützt und eine Beschädigung beim Betätigen des Fahrpedals durch den Fuß des Fahrers vermieden.

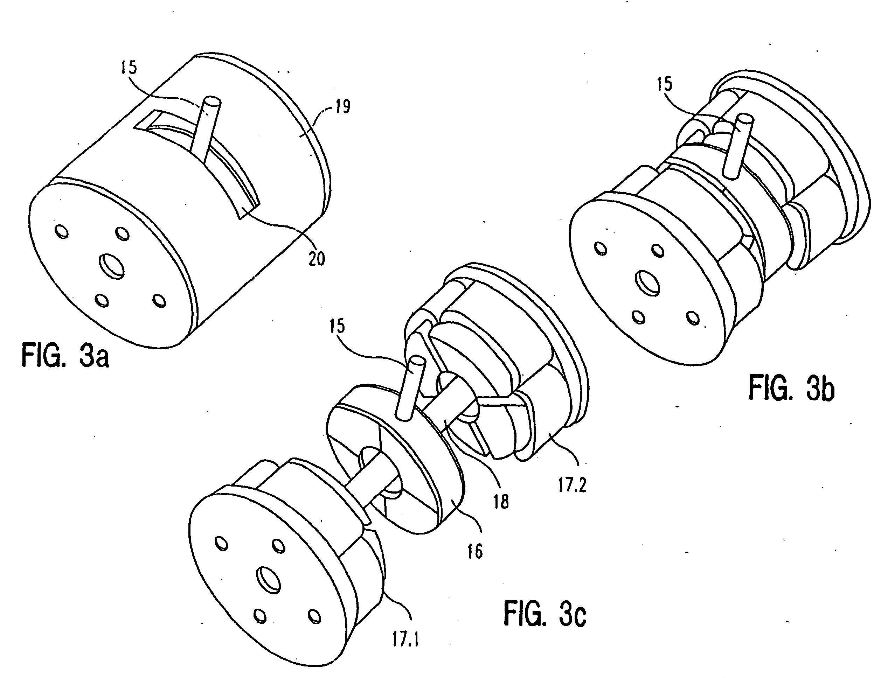

Der Torquemotor ist in Fig. 3a bis 3c gezeigt. Er weist als Rotoreinheit einen ringförmigen, genuteten Torquemotorrotor 16 mit großem Durchmesser auf. An dem Rotor 16 ist ein Motorzapfen 15 angeordnet. Über diesen Zapfen wird der Rotor an das Pedalhebelelement 5 angekoppelt.

Links und rechts des Rotors 16 ist jeweils eine Statorhälfte 17.1, 17.2 angeordnet. Mit Hilfe der Motorachse 18 bewegt sich der Rotor 16 in den beiden Statorhälften. Ausgebildet wird so ein Zwillings-Torquemotor. Zusammengeschoben ist der Torquemotor 1 in Fig. 3b gezeigt.

Wie Fig. 3a zeigt, ist über die beiden Statorhälften 17.1, 17.2 wenigstens teilweise ein Gehäuseelement 19 geschoben. In das Gehäuseelement 19 ist eine Schlitzausnehmung 20 eingebracht, in der sich der Motorzapfen 15 entsprechend frei bewegen kann.

Der Drehzahlbereich des Torquemotors 1 liegt zwischen 1 und ca. 1.200 Umdrehungen/Minute und eignet sich bei hohen Drehmomenten für einen Direktanschluß ohne Zwischengetriebe.

Der Torquemotor 1 ist mit der Mikrorechnereinheit 14 mit einem E²PROM verbunden. An der Mikrorechnereinheit 14 ist darüber hinaus ein Steuersensorelement 21 angeordnet. Das Steuersensorelement 21 kann als Geschwindigkeitssensor, Abstandssensor, Temperatursensor oder dergleichen ausgebildet sein.

Die Kupplungseinheit kann als erste Ausführungsform einer Kupplungseinheit 40 oder als zweite Ausführungsform einer Kupplungseinheit 140 ausgeführt werden.

Die erste Ausführungsform einer Kupplungseinheit 40, die als Rastkupplung ausgebildet ist, ist im zusammengebauten Zustand in Fig. 2c und im teilweise zerlegten Zustand in den Fig. 4a bis 4g gezeigt.

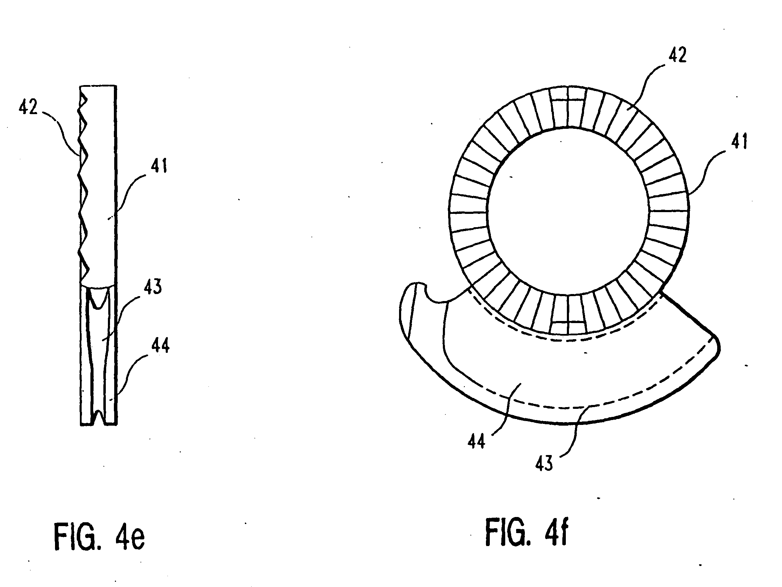

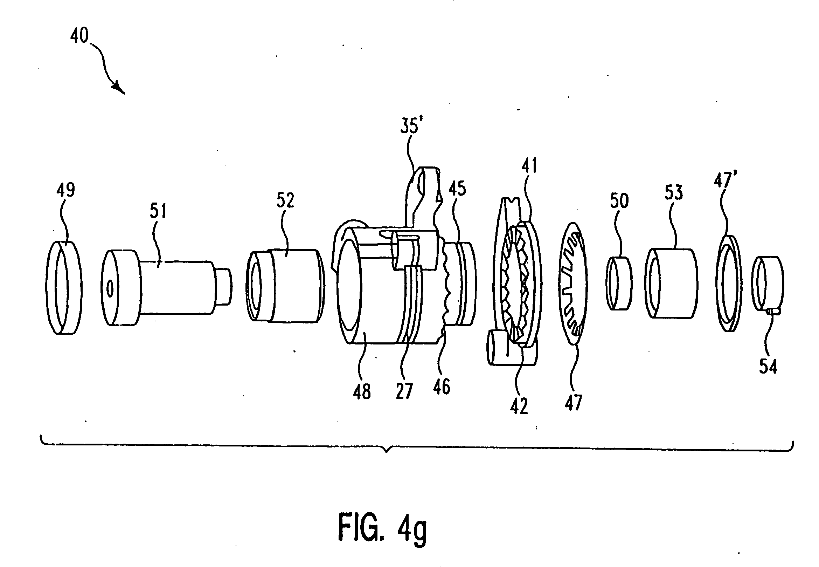

Die Kupplungseinheit 40 besteht aus einer Limp-home-Scheibe 41, auf der eine Limp-home-Verzahnung 42 angebracht ist. An der Scheibe 41 ist ein Seilaufnahmekörper 44 angeordnet, der eine Motorseilausnehmung 43 aufweist (vgl. insbesondere Fig. 4e, 4f und 4g).

Wie die Fig. 4a bis 4d zeigen, weist die Kupplungseinheit 40 darüber hinaus einen Betätigungskörper 48 auf, der mit einer Betätigungs-Verzahnung 46 versehen ist. Die Verzahnungen können jeweils durch wenigstens einen Zahn und eine entsprechende Zahnlücke realisiert werden. Welchem Körper der Zahn und welchem die Zahnlücke zugeordnet wird, ist frei wählbar. Aus dem Betätigungskörper 48 ragt die Sensorwelle 45 heraus, auf der die Sensoreinheit 25 angeordnet ist. An dem Betätigungskörper 48 ist ein Antriebshebel 35' angeordnet. Darüber hinaus bildet die Sensorwelle 45 die Betätigungswelle aus. Die Teile der Kupplungseinheit 40 (vgl. Fig. 4g) werden mit Hilfe einer Kupplungsfedereinheit 47 zusammengehalten, die durch einen Sicherungsring 47' gesichert ist. Dadurch, daß sich die Limp-home-Verzahnung 42 und die Betätigungsverzahnung 46 gegenüberliegen, werden durch die Kupplungsfedereinheit 47 die Limp-home-Scheibe 41 und der Betätigungskörper 48 drehsicher aneinander gedrückt. Im Inneren des Betätigungskörpers 48 ist eine Reibhülse 52 des Dämpferelements 27 angeordnet. Eine Domwelle 51 wird von Kugellagern 49, 50 gehalten. Mit integriert sind in die Kupplungseinheit eine Ringmagnetaufnahme 53 und ein Ringmagnet 54 der Pedal-Sensoreinheit 25.

Wie insbesondere die Fig. 1 und 2c zeigen, ist mit dem Fahrpedalelement 6 das Gaspedalhebelelement 5 verbunden. Ein Motorzapfen 35 und ein Pedalzapfen 36 ermöglichen ein bewegliches und direktes kraftschlüssiges Verbinden mit dem Betätigungskörper 48 der Kupplungseinrichtung 40.

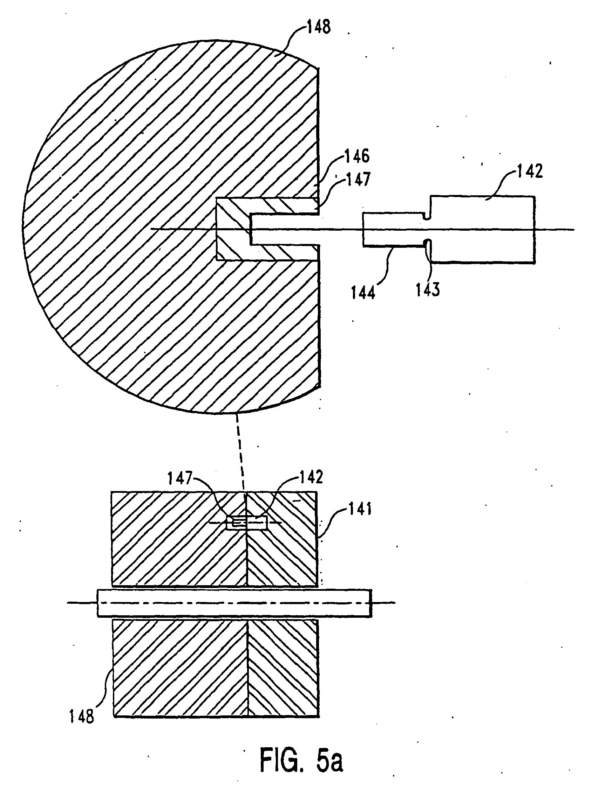

Die zweite Ausführungsform einer Kupplungseinheit 140 ist in den Fig. 5a bis 5c gezeigt. Die Kupplungseinheit 140 ist, wie insbesondere die Prinzip-Anordnung in Fig. 5a zeigt, als Stiftkupplung ausgebildet. Sie weist einen Limp-Home-Körper 141 auf, der gegenüber einem Betätigungskörper 148 angeordnet ist. Der Limp-Home-Körper 141 ist mit dem Betätigungskörper 148 durch eine Stifteinheit verbunden.

Die Stifteinheit besteht aus einem Stiftkörper 142, an dem ein Kupplungsstiftelement 144 angeordnet ist. In das Kupplungsstiftelement 144 ist eine wenigstens teilweise umlaufende Sollbruchausnehmung 143 eingebracht.

In den Betätigungskörper 148 ist in einer Hülsenausnehmung 146 ein Kupplungshülsenelement 147 eingesetzt. In dieses Kupplungshülsenelement ist das Kupplungsstiftelement 144 einschiebbar.

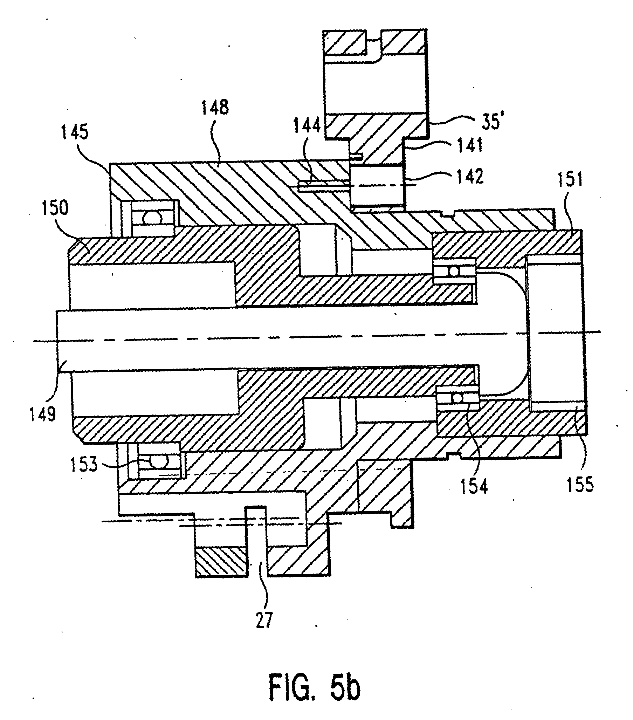

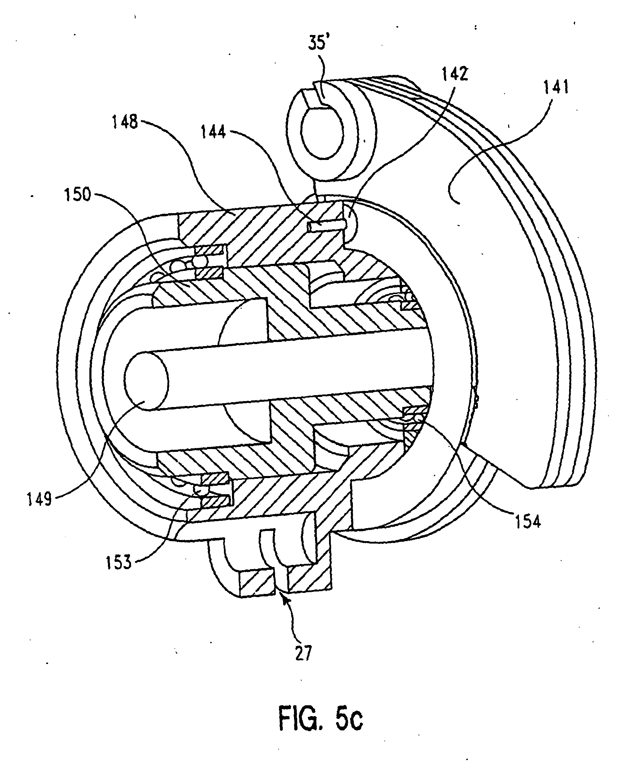

In den Fig. 5b und 5c ist der realisierte Aufbau der Stiftkupplungseinheit gezeigt.

In den Betätigungskörper 148 ist ein Kelchkörper 150 eingesetzt. Zwischen dem Betätigungskörper und dem Kelchkörper ist ein Kelchringlager 153 positioniert. Um den Betätigungskörper 148, der ebenfalls eine im wesentlichen kelchförmige Konfiguration hat, ist der Limp-Home-Körper 141 gelegt, an dem der Antriebshebel 35' angeordnet ist. Mit Hilfe des Stiftkörpers 142 und des Kupplungsstiftelements 144 ist der Limp-Home-Körper 141 mit dem Betätigungskörper 148 verbunden.

In den Kelchkörper 148 wird ein Haltestiftelement 149 geschoben, das ein Halteringlager 154 hält, das einen Haltekörper 151 führt. Der Haltekörper 151 wird mit Hilfe eines Verschlußelements 155 gehalten. Hierdurch ist die Kupplungseinheit 140 drehbeweglich gelagert.

Wie insbesondere die Fig. 1 zeigt, ist mit dem Fahrpedalelement 6 das Gashebelelement 5 verbunden. Der Motorzapfen 35 und der Pedalzapfen 36 ermöglichen ein bewegliches und direktes kraftschlüssiges Zusammenwirken mit dem Betätigungskörper 148 der Kupplungseinrichtung 140.

Die Arbeitsweise des intelligenten Fahrpedals sei, insbesondere unter Zuhilfenahme der Fig. 6a und 6b, in denen eine Pedalkraft F in Abhängigkeit von einem Pedalweg W dargestellt ist, erläutert.

Durch Treten auf das Fahrpedalelement 6 wird in einem Fahrzeug durch einen Fahrzeugführer das Gaspedalhebelelement 5 betätigt. Durch das Gaspedalhebelelement 5 wird die Kupplungseinheit 40, 140 in eine der Pedalstellung entsprechende Drehposition gebracht. Diese Drehposition wird durch die Pedal-Sensoreinheit 25 festgestellt.

Die Drehbewegung der Kupplungseinheit 40, 140 führt zu einer Zugkraft in den daran befestigten Seilen 11, 12 und so zur Spannung der Dämpferelemente bzw. Federn 9.1, 9.2, 10.1, 10.2.

Die Funktion der Dämpfung nehmen die Elemente 9.1, 9.2, 10.1, 10.2 zusammen mit dem Dämpferelement 27 wahr. Sie setzen der Pedalbewegung eine Dämpfungskraft F9, 10 entgegen, wie in Fig. 6a gezeigt. Das heißt, je stärker und intensiver das Fahrpedalelement 6 und damit das Gaspedalhebelelement 5 betätigt wird, um so größer ist die Dämpfungskraft F9, 10.

Bevor der Fahrzeugführer eine Autobahn befährt, gibt er eine vorgeschriebene Richtgeschwindigkeit von 130 km/h in den E²PROM ein. Die mit ihm fahrenden Fahrzeuge verleiten ihn dazu, die vorgeschriebene Richtgeschwindigkeit von 130 km/h als Normalzustand zu überschreiten. Das Steuersensorelement oder eine übergeordnete Einheit erfaßt diese Überschreitung und gibt sie an die Mikrorechnereinheit 14 weiter. Die Mikrorechnereinheit 14 vergleicht den Ist- mit dem Normwert und veranlasst die sofortige Einschaltung des Torquemotors 1. Der Torquemotor 1 entwickelt eine Torquemotorkraft F1, die wie Fig. 6a zeigt, gradlinig ansteigend wirkt.

Durch das ruckartige Ansteigen der Dämpfungskraft in der Betätigungsbewegung B3, die jetzt aus der Torquemotorkraft F1 plus Dämpfungskraft F9, 10 besteht, wird der Fahrzeugführer sehr unsanft auf die Überschreitung des Normalzustandes aufmerksam gemacht. Durch eine kurzzeitige Drehumkehr des Torquemotors 1, die sich in einer Welle beim Übergang von F9, 10 zu F1 bemerkbar macht, wird der Fahrer zusätzlich auf die Überschreitung des Normalzustandes hingewiesen. Läßt er dennoch nicht von der weiteren Betätigung des Fahrpedalelements und damit des Gaspedalhebelelements 5 ab, muß er die Summe beider Kräfte F1 plus F9, 10 überwinden. Innerhalb des Kurventeils F9, 10 befindet sich ein gestrichelter Abschnitt HS. Hier kann durch ein kurzzeitiges Zittern, z.B. ein hochfrequentes Signal, das baldige Erreichen der Höchstgeschwindigkeit und/oder weitere Fehler, z.B. ein zu geringer Reifendruck, signalisiert werden. Diese Signalisierung ist bei Auftreten von Fehlern auch auf den anderen Kurventeilen möglich.

Das ruckartige Ansteigen der Dämpfungskraft führt dazu, daß der Fahrzeugführer nach kurzer Zeit den Fuß vom Fahrpedalelement 6 herunternimmt. Damit verringert sich zwangsläufig die Geschwindigkeit. Diese Änderung wird wiederum erfaßt. Sobald der Normalzustand wieder erreicht ist, wird der Torquemotor abgeschaltet und nur die Federelemente und das Dämpferelement 27 als Dämpferelemente wirken der Betätigungskraft entgegen.

Wird der Fuß vollständig vom Fahrpedalelement 6 genommen und damit durch die Federelemente zurückgestellt, wirkt Kraft F9, 10 der Dämpferelemente so, daß sich eine durch die besondere Ausbildung der Elemente gedämpfte Rückholbewegung und damit ein Kurvenverlauf ergibt, der durch eine Pedalrückbewegung R₃ in Fig. 6a dargestellt ist.

Die Wirkungsweise der Kupplungseinheit 40 ist in Fig. 6b gezeigt. Der Fahrer betätigt das Fahrpedalelement 6. Beim Herunterdrücken des Gaspedalhebelelements 5 (vgl. insbesondere Fig. 2c) werden die Kupplungseinheit 40, der Torquemotor 1 und die beiden Seile 11, 12 bewegt. Die Dämpferelemente setzen dieser Betätigungsbewegung B39, wie bereits erwähnt, die Dämpfungskraft F9, 10 entgegen.

Durch einen Defekt bleibt plötzlich der Torquemotor 1 stehen. Hierdurch ist es durch die Blockierkraft FB1 nicht mehr möglich, das Fahrpedalelement 6 weiter zu bewegen. Die Bewegungen des Fahrpedalelements können nicht mehr auf die Drosselklappeneinheit übertragen werden. Das Fahrzeug ist fahruntüchtig.

Der Fahrer hat aber die Möglichkeit, das Fahrzeug wieder bewegungsfähig zu machen. Durch die Erzeugung einer Lösekraft FL1 von etwa 150 N werden durch verstärktes Betätigen des Fahrpedalelements 6 die Limp-home-Scheibe 41 und der Betätigungskörper 48 voneinander getrennt. In der ersten Ausführungsform einer Kupplungseinheit 40 (vgl. Fig. 4a-4g) überwindet die Lösekraft die Kraft der Kupplungsfedereinheit 47 und führt zu einem Verrutschen der Limp-home-Scheibe 41 gegenüber dem Betätigungskörper 48. Durch die Limp-home-Verzahnung 42 und die Betätigungs-Verzahnung 46 bleiben die Limp-home-Scheibe 41 und der Betätigungskörper 48 in dieser neuen Stellung zueinander stehen. Wird das Fahrpedalelement 6 jetzt losgelassen, ist das Kupplungsseil 11 in der Lage, die Kupplungseinheit 40 mit den beiden Elementen 41 und 48 zurückzustellen. Das Motorseil 12 hängt in diesem Fall durch. Das Fahrpedalelement 6 ist jetzt innerhalb der Durchhängelänge bis zur Straffstellung des Motorseils 11 bewegbar. Der Betätigungskraft wird bei der Betätigungsbewegung B39 nur noch die Dämpfungskraft F9 der beiden Federelemente 9.1 und 9.2 und des Dämpferelements 27 entgegengesetzt. Beim Loslassen des Pedals wirken der Rückholbewegung nur die Elemente 9.1, 9.2, 27 entgegen, die durch die Pedalrückbewegung R39 als Pedal-Limp-home-Rückbewegung dargestellt ist. Dadurch, daß das Fahrpedalelement 6 wieder frei bewegbar ist, ist das Fahrzeug fahrbereit und kann mit verminderter Geschwindigkeit in eine Werkstatt gefahren werden. Dort kann wenigstens der schadhafte Torquemotor 1 ausgebaut und durch einen neuen ersetzt werden.

Die Wirkungsweise der zweiten Ausführungsform einer Kupplungseinheit 140 läßt sich ebenfalls anhand der Fig. 6b erläutern. Bis zur Blockade des Torquemotors 1 ist das Fahrpedalelement ebenso wie bei der Kupplungseinheit 40 zu betätigen.

Auch hier hat der Fahrer die Möglichkeit durch Erzeugung einer Lösekraft FL1 das Fahrzeug wieder fahrtüchtig zu machen.

Durch das ruckartige Betätigen des Fahrpedalelements 6 wird die Bewegungskraft als Lösekraft FL1 auf den Limp-Home-Körper 141 übertragen. Diese Lösekraft FL1 sorgt dafür, daß das Kupplungsstiftelement des Stiftkörpers in der Sollbruchausnehmung durchbricht. Hierdurch wird der Limp-Home-Körper 141 von dem Betätigungskörper 148 getrennt und die Blockierkraft FB₁ aufgehoben. Der Betätigungskörper 148 hält durch den blockierten Motor in der gerade eingenommenen Stellung das Seil 12 fest.

Mit Hilfe des Kupplungsseils 11 hingegen lässt sich der Limp-Home-Körper 141 um den blockierten Betätigungskörper drehen. Das Fahrpedalelement 6 ist jetzt wieder frei bewegbar. Der Betätigungskraft wird bei der Betätigungsbewegung B₃₉ nur noch die Dämpfungskraft F₉ der beiden Federelemente 9.1 und 9.2 sowie des Dämpferelements 27 entgegengesetzt. Beim Loslassen des Pedals wird die Rückholbewegung alleine durch die Elemente 9.1, 9.2 bewirkt, die durch die Pedalrückbewegung R₃₉ als Pedal- Limp-Home-Rückholbewegung eingestellt ist. Dadurch, daß das Pedalelement 6 wieder frei bewegbar ist, lässt sich das Fahrzeug in eine Werkstatt fahren. Dort kann der schadhafte Torquemotor ausgebaut und durch einen neuen ersetzt werden.

Die Kupplungseinheit 140 läßt sich ebenfalls durch eine neue ersetzen oder wieder regenerieren. Und zwar ist beim Regenerieren der Stiftkörper 142 aus dem Limp-Home-Körper 141 sowie das abgescherte Kupplungsstiftelement 144 aus der Hülsenausnehmung herauszuziehen. Anschließend wird ein neuer Stiftkörper 142 in den Limp-Home-Körper 141 eingesetzt und der komplette Limp-Home-Körper wieder auf Betätigungskörper 148 aufgeschoben. Hierbei rastet das Kupplungsstiftelement 144 wieder in das Kupplungshülsenelement 147 ein. Die wieder komplette Einheit des intelligenten Fahrpedals wird in das Fahrzeug eingesetzt. Das Fahrzeug kann nach kurzer Reparaturzeit die Werkstatt wieder verlassen.

## Patentansprüche

1. Fahrpedalvorrichtung, die wenigstens aufweist,
- ein Pedalelement (3), das gegenüber einer Basiseinheit (4, 7) zu bewegen ist,
- wenigstens eine Rückholeinheit (9.1, 9.2, 10.1, 10.2, 11, 12, 27), zur Rückstellung des Pedalelements (3) in Richtung einer Ausgangsstellung,
- wobei wenigstens eine Motoreinheit (i) vorgesehen ist, die mit dem Pedalelement (3) und der Basiseinheit (4, 7) so verbunden ist, daß eine Motorkraft der Motoreinheit (i) auf das Pedalelement (3) wirkt und an diesem eine zusätzliche Rückstellkraft erzeugt,
- wobei zwischen der Motoreinheit (i) und dem Pedalelement (3) eine Kupplungseinheit (40; 140) so angeordnet ist, daß bei Betätigung des Pedalelements (3) eine Bewegung der Motoreinheit (1) erfolgt, wobei
- die Kupplungseinheit (40,140) so ausgebildet ist, daß sie im Fall der Blockierung der Motoreinheit (1) lösbar ist, so daß eine Betätigung des Pedalelements (3) weiter möglich ist.

2. Vorrichtung nach Anspruch 1, bei der
- die Rückholeinheit wenigstens ein Kupplungs- und ein Motorseil (11, 12) aufweist und
- das Pedalelement (3) mit dem Kupplungsseil (11) und die Motoreinheit (1) mit dem Motorseil (12) verbunden ist.

3. Fahrpedalvorrichtung, die wenigstens aufweist,
- ein Pedalelement (3), das gegenüber einer Basiseinheit (4, 7) zu bewegen ist,
- wenigstens eine Rückholeinheit (9.1, 9.2, 10.1, 10.2, 11, 12, 27), zur Rückstellung des Pedalelements (3) in Richtung einer Ausgangsstellung,
- wobei wenigstens eine Motoreinheit (1) vorgesehen ist, die mit dem Pedalelement (3) und der Basiseinheit (4, 7) so verbunden ist, daß bei Betätigung des Pedalelements (3) eine Bewegung der Motoreinheit (1) erfolgt,
- wobei die Rückholeinheit wenigstens ein Kupplungs- und ein Motorseil (11, 12) aufweist, die mit dem Pedalelement (3) und der Motoreinheit (i) so verbunden sind, daß bei einer Blockierung der Motoreinheit (i) die Motorseilverbindung aufzuheben und das Pedalelement (3) mit der Kupplungsseilverbindung betätigbar ist.

4. Vorrichtung nach Anspruch 2 oder 3, **dadurch gekennzeichnet,**
**daß** die Rückholeinheit wenigstens ein Kupplungs- und ein Motorseil (11, 12) aufweist und
**daß** das Pedalelement (3) mit dem Kupplungsseil (11) und die Motoreinheit (1) mit dem Motorseil (12) derart verbunden ist, daß bei einer Blockierung der Motoreinheit (1) das Motorseil (12) abgekoppelt wird.

5. Vorrichtung nach Anspruch 2 oder 3, **dadurch gekennzeichnet,**
**daß** zwischen der Motoreinheit (1) und dem Pedalelement (3) eine Kupplungseinheit (40; 140) und/oder in dem Motorseil (12) eine Dehnungsstrecke angeordnet ist.

6. Vorrichtung nach einem der vorangehenden Ansprüche, **dadurch gekennzeichnet, daß** die mit dem Kupplungsseil (11) verbundene Kupplungseinheit (40; 140) in einem Gaspedaldrehpunkt (2) angeordnet und die in einem Motordrehpunkt (18) angeordnete Motoreinheit (i) durch das Motorseil (12) mit dem Gaspedaldrehpunkt (2) verbunden ist.

7. Vorrichtung nach einem der vorangehenden Ansprüche, **dadurch gekennzeichnet, daß** die Kupplungseinheit (40; 140) als Rastkupplung, Stiftkupplung, Motorkupplung, Lamellenkupplung und/oder Lösekupplung ausgebildet ist.

8. Vorrichtung nach einem der vorangehenden Ansprüche, **dadurch gekennzeichnet, daß** die Kupplungseinheit (40) aus einem Betätigungskörper (48) mit einer Betätigungsverzahnung (46) und einer Limp-home - Scheibe (41) mit einer Limp-home- Verzahnung (42) mit wenigstens einem Zahn und einer Zahnlücke besteht.

9. Vorrichtung nach Anspruch 8, **dadurch gekennzeichnet, daß** der Betätigungskörper (48) und die Limp-home - Scheibe (41) um eine im Gaspedaldrehpunkt (2) angeordnete erste Sensorwelle (45) angeordnet sind.

10. Vorrichtung nach Anspruch 9, **dadurch gekennzeichnet, daß** an der ersten Sensorwelle (45) eine Pedal- Sensoreinheit (25) angeordnet ist.

11. Vorrichtung nach einem der Ansprüche 8 bis 10, **dadurch gekennzeichnet, daß** der Betätigungskörper (48) und die Limp-home - Scheibe (41) mit einer Kupplungsfedereinheit (47) zusammengedrückt sind.

12. Vorrichtung nach einem der Ansprüche 8 bis 11, **dadurch gekennzeichnet, daß** das Kupplungsseil (11) mit dem Betätigungskörper (46) und das Motorseil (12) mit der Limp-home - Scheibe (41) verbunden ist.

13. Vorrichtung nach einem der Ansprüche 1 bis 7, **dadurch gekennzeichnet,**
- **daß** die Kupplungseinheit (140) aus einem Limp-Home-Körper (141) und einem Betätigungskörper (148) besteht, die durch wenigstens eine Stifteinheit (142, 143, 144, 147) verbunden sind, und
- **daß** mit dem Limp-Home-Körper (141) das Pedalelement (3) und das Kupplungsseil (11) und mit dem Betätigungskörper (148) das Motorseil (12) verbunden ist, das wenigstens teilweise an der Motoreinheit (1) angeordnet ist.

14. Vorrichtung nach Anspruch 13, **dadurch gekennzeichnet, daß** die Stifteinheit mit einer Sollbrucheinheit (143) versehen ist.

15. Vorrichtung nach wenigstens einem der Ansprüche 13 und 14, **dadurch gekennzeichnet, daß** die Stifteinheit aus einem Stiftkörper (142) und einem davor angeordneten Kupplungsstiftelement (144) besteht, wobei in das Stiftelement (144) eine wenigstens teilweise umlaufende Sollbruchausnehmung (143) als Sollbrucheinheit eingebracht ist.

16. Vorrichtung nach wenigstens einem der Ansprüche 13 bis 15, **dadurch gekennzeichnet, daß** der Stiftkörper (143) in dem Limp-Home-Körper (141) und das Kupplungsstiftelement (144) in dem Betätigungskörper (148) angeordnet ist.

17. Vorrichtung nach wenigstens einem der Ansprüche 13 bis 16, **dadurch gekennzeichnet, daß** in dem Betätigungskörper (148) ein Kupplungshülsenelement (147) angeordnet ist, in den das Kupplungsstiftelement (144) einzustecken ist.

18. Vorrichtung nach wenigstens einem der Ansprüche 8 bis 17, **dadurch gekennzeichnet, daß** das Pedalelement (3) aus einem Fahrpedalelement (6) besteht, zwischen dem und dem Limp-Home Körper (141) ein Gashebeleiement(5) angeordnet ist.

19. Vorrichtung nach wenigstens einem der Ansprüche 8 bis 18, **dadurch gekennzeichnet, daß** der Betätigungskörper (148) in einer zweiten Sensorwelle (145) endet, die mit der Pedal-Sensoreinheit (25) verbunden ist.

20. Vorrichtung nach wenigstens einem der Ansprüche 8 bis 19, **dadurch gekennzeichnet, daß** der Betätigungskörper (148) um einen Kelch- und einen Haltekörper (150, 151) und der Limp-Home-Körper (141) um den Betätigungskörper (148) angeordnet ist.

21. Vorrichtung nach wenigstens einem der vorhergehenden Ansprüche , **dadurch gekennzeichnet, daß** das Kupplungsseil (11) über wenigstens ein Dämpferelement (27) geführt ist und das Kupplungsseil (11) und das Motorseil (12) mit wenigstens einem Federelement der Rückholeinheit verbunden ist.

22. Vorrichtung nach wenigstens einem der vorhergehenden Ansprüche, **dadurch gekennzeichnet, daß** wenigstens die Motoreinheit (1), die Kupplungseinheit (40), das Kupplungs- und das Motorseil (11, 12), ein erstes und ein zweites Dämpferelement (9.1, 9.2, 10.1, 10.2) und die Pedal - Sensoreinheit (25) wenigstens teilweise von einem Bodengehäuseelement (7) als Basiseinheit umschlossen sind, das wenigstens teilweise mit einer Bodenplatte (4) abgedeckt ist.

23. Vorrichtung nach wenigstens einem der vorhergehenden Ansprüche, **dadurch gekennzeichnet, daß** eine Steuereinheit (14) vorgesehen ist, die mit einem Sensorelement (21) verbunden und mit der die Motoreinheit (i) zu steuern ist.

24. Vorrichtung nach wenigstens einem der vorhergehenden Ansprüche, **dadurch gekennzeichnet, daß** die Motoreinheit ein Torquemotor (i) ist.

25. Vorrichtung nach Anspruch 24, **dadurch gekennzeichnet, daß** der Torquemotor (1) als Zwillings - Torquemotor ausgebildet ist.

## Claims

1. A gas pedal apparatus, which has at least
- a pedal element (3), which is movable with respect to a base unit (4, 7),
- at least one retraction unit (9.1, 9.2, 10.1, 10.2, 11, 12, 27), for restoring the pedal element (3) in the direction of an initial position,
- wherein at least one motor unit (1) is provided, which is connected with the pedal element (3) and the base unit (4, 7) such that a motor force of the motor unit (1) acts on the pedal element (3) and creates an additional restoring force upon it,
- wherein a clutch unit (40; 140) is arranged between the motor unit (1) and the pedal element (3) such that during actuation of the pedal element (3), a movement of the motor unit (1) occurs, wherein
- the clutch unit (40, 140) is designed such that it is releasable in the case of jamming of the motor unit (1), such that an actuation of the pedal element (3) continues to be possible.

2. The apparatus according to Claim 1, in which
- the retraction unit has at least a clutch cable and a motor cable (11, 12) and
- the pedal element (3) is connected with the clutch cable (11), and the motor unit (1) is connected with the motor cable (12).

3. A gas pedal apparatus, which has at least,
- a pedal element (3), which is movable with respect to a base unit (4, 7),
- at least one retraction unit (9.1, 9.2, 10.1, 10.2, 11, 12, 27), for restoring the pedal element (3) in the direction of an initial position,
- wherein at least one motor unit (1) is provided, which is connected with the pedal element (3) and the base unit (4, 7) such that during actuation of the pedal element (3), a movement of the motor unit (1) occurs,
- wherein the retraction unit has at least a clutch cable and a motor cable (11, 12), which are connected with the pedal element (3) and the motor unit (1) such that during a jamming of the motor unit (1), the motor cable connection is to be released, and the pedal element (3) can be actuated with the clutch cable connection.

4. The apparatus according to Claim 2 or 3, **characterized in that**
the retraction unit has at least a clutch cable and a motor cable (11, 12), and that
the pedal element (3) is connected with the clutch cable (11) and the motor unit (1) is connected with the motor cable (12) in such a way that during a jamming of the motor unit (1) the motor cable (12) is decoupled.

5. The apparatus according to Claim 2 or 3, **characterized in that** a clutch unit (40; 140) is arranged between the motor unit (1) and the pedal unit (3) and/or an elongation zone is arranged in the motor cable (12).

6. The apparatus according to one of the preceding claims, **characterized in that** the clutch unit (40; 140) connected with the clutch cable (11) is arranged in a gas pedal pivot point (2), and the motor unit (1) arranged in a motor pivot point (18) is connected with the gas pedal pivot point (2) by the motor cable (12).

7. The apparatus according to one of the preceding claims, **characterized in that** the clutch unit (40; 140) is formed as a locking clutch, pin clutch, motor clutch, multidisc clutch and/or a separator clutch.

8. The apparatus according to one of the preceding claims, **characterized in that** the clutch unit (40) is composed of an actuating body (48) with an actuating toothing (46) and a limp home disc (41) with a limp home toothing (42) with at least one tooth and one tooth space.

9. The apparatus according to Claim 8, **characterized in that** the actuation body (48) and the limp home disc (41) are arranged about a first sensor shaft (45) arranged in the gas pedal pivot point (2).

10. The apparatus according to Claim 9 **characterized in that** a pedal - sensor unit (25) is arranged on the first sensor shaft (45).

11. The apparatus according to one of the Claims 8 to 10, **characterized in that** the actuation body (48) and the limp home disc (41) are pressed together with a clutch spring unit (47).

12. The apparatus according to one of the Claims 8 to 11, **characterized in that** the clutch cable (11) is connected with the actuation body (46) and the motor cable (12) is connected with the limp home disc (41).

13. The apparatus according to one of the Claims 1 to 7, **characterized in that**
- the clutch unit (140) is composed of a limp home body (141) and an actuation body (148), which are connected by at least one pin unit (142, 143, 144, 147), and
- that the pedal element (3) and the clutch cable (11) are connected with the limp home body (141), and the motor cable (12) is connected with the actuation body (148), where said motor cable (12) is arranged at least partially on the motor unit (1).

14. The apparatus according to Claim 13, **characterized in that** the pin unit is provided with a predetermined break unit (143).

15. The apparatus according to one of the Claims 13 and 14, **characterized in that** the pin unit comprises a pin body (142) and a coupling pin element (144) arranged before it, wherein an at least partially circumferential predetermined break recess (143) is placed in the pin element (144) as a predetermined break unit.

16. The apparatus according to at least one of the Claims 13 to 15, **characterized in that** the pin body (143) is arranged in the limp home body (141) and the coupling pin element (144) is arranged in the actuation body (148).

17. The apparatus according to at least one of the Claims 13 to 16 **characterized in that** arranged in the actuation body (148) is a coupling sleeve element (147), into which the coupling pin element (144) is to be inserted.

18. The apparatus according to at least one of the Claims 8 to 17, **characterized in that** the pedal element (3) is comprised of a gas pedal element (6), arranged between which and the limp home body (141) is a gas lever element (5).

19. The apparatus according to at least one of the Claims 8 to 18 **characterized in that** the actuation body (148) ends in a second sensor shaft (145), which is connected with the pedal sensor unit (25).

20. The apparatus according to at least one of the Claims 8 to 19, **characterized in that** the actuation body (148) is arranged around a cup body and a retaining body (150, 151), and the limp home body (141) is arranged around the actuation body (148).

21. The apparatus according to at least one of the preceding claims, **characterized in that** the clutch cable (11) is guided via at least one damper element (27), and the clutch cable (11) and the motor cable (12) are connected with at least one spring element of the retraction unit.

22. The apparatus according to at least one of the preceding claims, **characterized in that** at least the motor unit (1), the clutch unit (40), the clutch cable and the motor cable (11, 12), a first and a second damper element (9.1, 9.2, 10.1, 10.2) and the pedal sensor unit (25) are at least partially enveloped by a floor housing element (7) as a base unit, which is at least partially covered with a floor plate (4).

23. The apparatus according to at least one of the preceding claims, **characterized in that** a control unit (14) is provided, which is connected with a sensor element (21) and with which the motor unit (1) is to be controlled.

24. The apparatus according to at least one of the preceding claims, **characterized in that** the motor unit is a torque motor (1).

25. The apparatus according to Claim 24, **characterized in that** the torque motor (1) is designed as a twin torque motor.

## Revendications

1. Dispositif de pédale d'accélérateur, qui présente au moins
- un élément de pédale (3) qui est à mouvoir par rapport à une unité de base (4, 7),
- au moins une unité de retour (9.1, 9.2, 10.1, 10.2, 11, 12, 27), pour le mouvement de retour de l'élément de pédale (3) en direction d'une position initiale,
- dans lequel au moins une unité de moteur (1) est prévue, qui est raccordée à l'élément de pédale (3) et à l'unité de base (4, 7) de telle façon qu'une force de moteur de l'unité de moteur (1) agit sur l'élément de pédale (3) et génère au niveau de celui-ci une force de retour supplémentaire,
- dans lequel entre l'unité de moteur (1) et l'élément de pédale (3), une unité d'embrayage (40 ; 140) est disposée de telle façon que lors de l'actionnement de l'élément de pédale (3) un mouvement de l'unité de moteur (1) a lieu, dans lequel
- l'unité d'embrayage (40, 140) est constituée de telle façon qu'elle peut être libérée en cas de blocage de l'unité de moteur (1), de sorte qu'un actionnement de l'élément de pédale (3) est toujours possible.

2. Dispositif selon la revendication 1, dans lequel
- l'unité de retour présente au moins un câble d'embrayage et un câble de moteur (11, 12) et
- l'élément de pédale (3) est raccordé au câble d'embrayage (11) et l'unité de moteur (1) au câble de moteur (12).

3. Dispositif de pédale d'accélérateur, qui présente au moins
- un élément de pédale (3) qui est à mouvoir par rapport à une unité de base (4, 7),
- au moins une unité de retour (9.1, 9.2, 10.1, 10.2, 11, 12, 27) pour le mouvement de retour de l'élément de pédale (3) en direction d'une position initiale,
- dans lequel au moins une unité de moteur (1) est prévue qui est raccordée à l'élément de pédale (3) et l'unité de base (4, 7) de telle sorte que lors de l'actionnement de l'élément de pédale (3), un mouvement de l'unité de moteur (1) a lieu,
- dans lequel l'unité de retour présente au moins un câble d'embrayage et un câble de moteur (11, 12), qui sont raccordés à l'élément de pédale (3) et à l'unité de moteur (1) de telle façon que lors d'un blocage de l'unité de moteur (1), le raccordement de câble de moteur peut être interrompu et l'élément de pédale (3) peut être actionné avec le raccordement de câble d'embrayage.

4. Dispositif selon la revendication 2 ou 3, **caractérisé en ce que**
l'unité de retour présente au moins un câble d'embrayage et un câble de moteur (11, 12) et
l'élément de pédale (3) est raccordé au câble d'embrayage (11) et l'unité de moteur (1) au câble de moteur (12) de telle façon que lors d'un blocage de l'unité de moteur (1), le câble de moteur (12) est décroché.

5. Dispositif selon la revendication 2 ou 3, **caractérisé en ce qu'**
est disposée entre l'unité de moteur (1) et l'élément de pédale (3) une unité d'embrayage (40 ; 140) et / ou dans le câble de moteur (12) une section d'allongement.

6. Dispositif selon l'une des revendications précédentes, **caractérisé en ce que** l'unité d'embrayage (40 ; 140) raccordée au câble d'embrayage (11) est disposée dans un centre de rotation de pédale d'accélérateur (2) et l'unité de moteur (1) disposée dans un centre de rotation de moteur (18) est raccordée au centre de rotation de pédale d'accélérateur (2) par le câble de moteur (12).

7. Dispositif selon l'une des revendications précédentes, **caractérisé en ce que** l'unité d'embrayage (40 ; 140) est constituée en tant qu'embrayage d'enclenchement, accouplement à broches, accouplement moteur, embrayage à disques multiples et/ou embrayage de desserrage.

8. Dispositif selon l'une des revendications précédentes, **caractérisé en ce que** l'unité d'embrayage (40) est composée d'un corps d'actionnement (48) avec une denture d'actionnement (46) et d'un disque de "limp-home" (41) avec une denture de "limp-home" (42) avec au moins une dent et un creux.

9. Dispositif selon la revendication 8, **caractérisé en ce que** le corps d'actionnement (48) et le disque "limp-home" (41) sont disposés autour d'un premier arbre capteur (45) disposé dans le centre de rotation de pédale d'accélérateur (2).

10. Dispositif selon la revendication 9, **caractérisé en ce qu'**une unité capteur-pédale (25) est disposée sur le premier arbre capteur (45).

11. Dispositif selon l'une des revendications 8 à 10, **caractérisé en ce que** le corps d'actionnement (48) et le disque "limp-home" (41) sont pressés ensemble avec une unité de ressort d'embrayage (47).

12. Dispositif selon l'une des revendications 8 à 11, **caractérisé en ce que** le câble d'embrayage (11) est raccordé au corps d'actionnement (46) et le câble de moteur (12) au disque "limp-home" (41).

13. Dispositif selon l'une des revendications 1 à 7, **caractérisé en ce que**
- l'unité d'embrayage (140) est composée d'un corps "limp-home" (141) et d'un corps d'actionnement (148) qui sont raccordés par au moins une unité de broche (142, 143, 144, 147), et
- l'élément de pédale (3) et le câble d'embrayage (11) sont raccordés au corps "limp-home" (141) et le câble de moteur (12), qui est au moins partiellement disposé au niveau de l'unité de moteur (1), avec le corps d'actionnement (148).

14. Dispositif selon la revendication 13, **caractérisé en ce que** l'unité de broche est munie d'une unité de rupture intentionnelle (143).

15. Dispositif selon au moins une des revendications 13 et 14, **caractérisé en ce que** l'unité de broche est composée d'un corps de broche (142) et d'un élément de broche d'accouplement (144) disposé devant ce dernier, un creux de rupture intentionnelle (143) au moins partiellement circonférentiel étant réalisé dans l'élément de broche (144) en tant qu'unité de rupture intentionnelle.

16. Dispositif selon au moins une des revendications 13 à 15, **caractérisé en ce que** le corps de broche (143) est disposé dans le corps "limp-home" (141) et l'élément de broche d'accouplement (144) dans le corps d'actionnement (148).

17. Dispositif selon au moins une des revendications 13 à 16, **caractérisé en ce qu'**un élément de douille d'accouplement (147), dans lequel l'élément de broche d'accouplement (144) est à introduire, est disposé dans le corps d'actionnement (148).

18. Dispositif selon au moins une des revendications 8 à 17, **caractérisé en ce que** l'élément de pédale (3) est composé d'un élément de pédale d'accélérateur (6), un élément de commande des gaz (5) étant disposé entre celui-ci et le corps "limp-home" (141).

19. Dispositif selon au moins une des revendications 8 à 18, **caractérisé en ce que** le corps d'actionnement (148) se termine en un second arbre capteur (145) qui est raccordé à l'unité capteur-pédale (25).

20. Dispositif selon au moins une des revendications 8 à 19, **caractérisé en ce que** le corps d'actionnement (148) est disposé autour d'un corps en forme de coupe et un corps de retenue (150, 151) et le corps "limp-home" (141) autour du corps d'actionnement (148).

21. Dispositif selon au moins une des revendications précédentes, **caractérisé en ce que** le câble d'embrayage (11) est guidé en passant au moins par un élément d'amortisseur (27) et le câble d'embrayage (11) et le câble de moteur (12) sont raccordés à au moins un élément de ressort de l'unité de retour.

22. Dispositif selon au moins une des revendications précédentes, **caractérisé en ce qu'**au moins l'unité de moteur (1), l'unité d'embrayage (40), le câble d'embrayage et de moteur (11, 12), un premier et un second élément d'amortisseur (9.1, 9.2, 10.1, 10.2) et l'unité capteur-pédale (25) sont enveloppés au moins partiellement d'un élément de carter au sol (7) en tant qu'unité de base, qui est recouvert au moins partiellement d'une plaque de base (4).

23. Dispositif selon au moins une des revendications précédentes, **caractérisé en ce qu'**une unité de commande (14) est prévue qui est raccordée à un élément de capteur (21) et avec laquelle l'unité de moteur (1) peut être commandée.

24. Dispositif selon au moins une des revendications précédentes, **caractérisé en ce que** l'unité de moteur est un moteur-couple (1).

25. Dispositif selon la revendication 24, **caractérisé en ce que** le moteur-couple (1) est constitué en tant que moteur-couple double.
